(19) Europäisches Patentamt
European Patent Office
Office européen des brevets

(11)  **EP 2 550 492 B1**

(12)  **FASCICULE DE BREVET EUROPEEN**

(45) Date de publication et mention
de la délivrance du brevet:
**18.06.2014  Bulletin 2014/25**

(51) Int Cl.:
***F25B 9/00*** *(2006.01)*

(21) Numéro de dépôt: **11712936.1**

(22) Date de dépôt: **28.02.2011**

(86) Numéro de dépôt international:
**PCT/FR2011/050408**

(87) Numéro de publication internationale:
**WO 2011/117499 (29.09.2011 Gazette 2011/39)**

(54) **PROCÉDÉ ET INSTALLATION DE RÉFRIGÉRATION EN CHARGE PULSÉE**

KÜHLVERFAHREN UND -VORRICHTUNG MIT EINER PULSIERENDEN LAST

REFRIGERATION METHOD AND APPARATUS WITH A PULSATING LOAD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **23.03.2010  FR 1052072**

(43) Date de publication de la demande:
**30.01.2013  Bulletin 2013/05**

(73) Titulaire: **L'Air Liquide Société Anonyme pour l'Etude et
l'Exploitation des Procédés Georges Claude
75007 Paris (FR)**

(72) Inventeurs:
 • **AIGOUY, Gérald**
  **73110 La Croix de la Rochette (FR)**
 • **BRIEND, Pierre**
  **38170 Seyssinet (FR)**
 • **DESCHILDRE, Cindy**
  **38360 Sassenage (FR)**
 • **FAUVE, Eric**
  **F- 84500 BOLLENE (FR)**
 • **BERNHARDT, Jean-Marc**
  **38500 La Buisse (FR)**
 • **DELCAYRE, Franck**
  **38140 Rives sur Fure (FR)**

(74) Mandataire: **De Cuenca, Emmanuel Jaime
L'Air Liquide S.A.
Direction Propriété Intellectuelle
75 Quai d'Orsay
75321 Paris Cedex 07 (FR)**

(56) Documents cités:
**WO-A1-2010/109091    WO-A2-2009/024705**

 • **DAUGUET P ET AL: "Using Dynamic Simulation to support Helium Refrigerator Process Engineering", 100 YEARS OF LIQUID HELIUM : PROCEEDINGS OF THE TWENTY-SECOND INTERNATIONAL CRYOGENIC ENGINEERING CONFERENCE AND INTERNATIONAL CRYOGENIC MATERIALS CONFERENCE 2008, ICEC 22 - ICMC 2008 ; SEOUL, KOREA, JULY 21 - 25, 2008, KR, 1 janvier 2009 (2009-01-01), pages 39-44, XP008128498, ISBN: 978-89-957138-2-2**
 • **KALININ V ET AL: "ITER cryogenic system", FUSION ENGINEERING AND DESIGN, ELSEVIER SCIENCE PUBLISHERS, AMSTERDAM, NL LNKD- DOI:10.1016/J.FUSENGDES.2006.07.003, vol. 81, no. 23-24, 1 novembre 2006 (2006-11-01), pages 2589-2595, XP025115125, ISSN: 0920-3796 [extrait le 2006-11-01]**
 • **BRIEND P ET AL: "Dynamic simulation of a large scale and pulsed load helium refrigerator", INTERNET CITATION, 1 juillet 2009 (2009-07-01), page 1, XP007915622, Extrait de l'Internet: URL: http://www.sainc.com/cec-icmc09/techin div.asp?paperNumber=C3-N-02 [extrait le 2010-11-04] & BRIEND P ET AL: "DYNAMIC SIMULATION OF A LARGE SCALE PULSED LOAD HELIUM REFRIGERATOR", ADVANCES IN CRYOGENIC ENGINEERING: TRANSACTIONS OF THE CRYOGENIC ENGINEERING CONFERENCE - CEC, AMERICAN INSTITUTE OF PHYSICS, US, vol. 55, 9 avril 2010 (2010-04-09), pages 1453-1459, XP007915623, ISBN: 978-0-7354-0761-9 [extrait le 2010-11-04]**

- CLAUDET G ET AL: "Design of the ITER-FEAT cryoplant to achieve stable operation over a wide range of experimental parameters and operation scenarios", FUSION ENGINEERING AND DESIGN, ELSEVIER SCIENCE PUBLISHERS, AMSTERDAM, NL LNKD- DOI: 10.1016/S0920-3796(01)00434-3, vol. 58-59, 1 novembre 2001 (2001-11-01), pages 205-209, XP004312882, ISSN: 0920-3796

- DESCHILDRE C ET AL: "DYNAMIC SIMULATION OF AN HELIUM REFRIGERATOR", ADVANCES IN CRYOGENIC ENGINEERING: TRANSACTIONS OF THE CRYOGENIC ENGINEERING CONFERENCE - CEC, AIP, US, vol. 53, 16 mars 2008 (2008-03-16), pages 475-482, XP007915630, ISBN: 978-0-7354-0504-2 [extrait le 2010-11-04]

**Description**

La présente invention concerne un procédé et une installation de réfrigération en charge pulsée.

L'invention concerne plus particulièrement un procédé de réfrigération en charge pulsée d'un organe d'un « Tokamak», c'est-à-dire un organe d'une installation de génération intermittente d'un plasma, le procédé utilisant un dispositif de réfrigération soumettant un fluide de travail tel que de l'hélium à un cycle de travail comportant: une compression, un refroidissement et une détente, un échange thermique avec l'organe, un réchauffement, le Tokamak comportant au moins un mode de fonctionnement dit « périodique et symétrique », c'est-à-dire un mode de fonctionnement durant lequel des plasmas de durée Dp déterminée sont générés de façon périodique avec des intervalles entre deux plasmas successifs ayant une durée Dnp différant au plus de 30% par rapport à la durée Dp des plasmas (Dnp=Dp±30%), selon le procédé, la puissance de réfrigération produite par le dispositif de réfrigération étant augmentée à un niveau relativement élevé lorsque le Tokamak est dans une phase de génération d'un plasma tandis que la puissance de réfrigération produite par le dispositif de réfrigération est diminuée à un niveau relativement bas lorsque le Tokamak n'est plus dans une phase de génération d'un plasma.

L'invention concerne plus particulièrement un procédé et une installation de réfrigération en charge pulsée d'un organe d'un Tokamak, c'est-à-dire un organe d'une installation de génération intermittente d'un plasma.

Un Tokamak (acronyme russe de « Toroidalnaya Kamera c Magnitnymi Katushkami » est une installation capable de produire les conditions physiques nécessaires pour obtenir une énergie de fusion. En particulier, un Tokamak produit de façon intermittente un plasma, c'est-à-dire un gaz ionisé qui conduit l'électricité.

Les besoins de réfrigération des Tokamak sont conditionnés par leur régime de fonctionnement fortement transitoire. Un Tokamak produit un plasma de façon ponctuelle, non continue et répétée. Les plasmas sont générés de façon cyclique, à intervalles réguliers ou bien de façon aléatoire, à la demande.

Ce mode de fonctionnement nécessite un besoin en réfrigération dit en « charges pulsées ». C'est-à-dire qu'une puissance de réfrigération très importante est nécessaire pendant un temps bref (pendant la phase de génération du plasma). Cette forte demande de réfrigération est suivie d'une une période (jusqu'à la génération du plasma suivant) durant laquelle le besoin de puissance est plus faible.

Les réfrigérateurs de Tokamak sont donc conçus pour répondre à ce mode de fonctionnement. Ainsi, ces réfrigérateurs fonctionnent en mode dit « économiseur », qui consiste à produire une quantité d'hélium liquide pendant les phases d'attente entre les plasmas. L'hélium liquide produit est stocké dans une réserve qui sera consommée par ébullition pour refroidir un organe du Tokamak pendant les phases de génération de plasma.

Lorsque la période d'attente entre deux plasmas est suffisamment longue, le niveau maximum de remplissage de la réserve d'hélium liquide est atteint avant le plasma suivant. La puissance frigorifique du réfrigérateur peut alors être réduite ce qui constitue une économie d'énergie importante. Dans une solution classiquement mise en oeuvre, la puissance du réfrigérateur et réduite au minium via une baisse des pressions du cycle (c'est-à-dire une baisse du niveau de pression de compression de l'hélium dans son cycle de travail). La puissance du réfrigérateur peut également être diminuée ou augmentée en agissant sur débit de cycle lorsqu'un variateur de fréquence est disponible (c'est-à-dire que le débit d'hélium circulant dans le cycle de travail est sélectivement diminué ou augmenté).

Un réchauffeur est généralement prévu dans la réserve d'hélium liquide. Ce réchauffeur est activé de façon à consommer la puissance de réfrigération excédentaire, pour maintenir un niveau liquide constant ou au moins en dessous d'un seuil maximum.

Classiquement, lorsqu'un nouveau plasma est généré, le réfrigérateur est commuté pour produire une puissance maximale de réfrigération soit manuellement (par un opérateur), soit en fonction de la variation de cette « courbe de chauffe » du réchauffeur.

Lorsque le plasma et terminé et que la puissance de réfrigération requise est moindre, le retour du réfrigérateur vers un régime produisant moins de puissance froide est généralement réalisé de façon automatique lorsque que la puissance du réchauffeur devient nulle.

Ce mode de fonctionnement est globalement satisfaisant cependant, la consommation énergétique du réfrigérateur reste élevée.

Certains Tokamaks fonctionnent avec des générations de plasma répétées de façon périodique et cyclique, dont le profile périodique est proche du mode sinusoïdale. C'est-à-dire que des phases de plasma et des phases sans plasma se succèdent de façon périodique avec des durées identiques ou sensiblement identiques.

Bien que la génération de plasma soit effectuée sur un mode marche/arrêt (on/off), la charge thermique (c'est-à-dire le besoin en refroidissement) perçue par le réfrigérateur se rapproche d'une onde de type sinusoïdale.

Classiquement, la puissance d'un réfrigérateur est régulée en adaptant les pressions et les débits du cycle de travail du fluide de travail (hélium par exemple) aux besoins de refroidissement.

Par soucis de simplification, le fluide de travail sera désigné dans la suite « hélium ». Bien entendu, ce fluide de travail n'est pas limité à ce seul gaz mais peut comprendre tout gaz ou mélange de gaz approprié.

Un réfrigérateur de forte puissance de réfrigération comporte très souvent trois niveaux de pression de cycle dans le cycle de travail : une haute pression (HP) une moyenne pression (MP) et une basse pression (BP). Parfois, l'hélium est soumis à d'autres niveaux de pressions supplémentaires lorsque cela est nécessaire. Par exemple, le cycle de travail peut comporter une portion dans laquelle l'hélium est amené à une pression sub-atmosphérique (LP).

Le procédé et le dispositif selon l'invention ne sont cependant pas limités à un nombre d'étages de pressions particulier.

L'hélium à haute pression HP alimente des composants qui effectuent des taux de détente importants, comme par exemple des turbines de type Brayton, des turbines froides, des vannes de type Joule-Thomson.

L'hélium à moyenne pression MP est généralement nécessaire pour limiter la puissance des turbines de type Brayton pour lesquelles il n'est techniquement pas toujours possible d'effectuer une détente complète entre les niveaux de pression haut HP et bas BP.

La détente peut alors être limitée entre les niveaux haut HP et moyen MP. La présence d'un niveau de pression moyen MP peut par ailleurs être judicieuse pour améliorer l'efficacité des compresseurs, en étageant la compression de l'hélium.

L'optimum d'étagement des pressions est couramment choisi pour la valeur théorique $MP = \sqrt{BP \times HP}$ . La pression basse BP correspond quant à elle à la pression de saturation de l'hélium et à la pression d'aspiration des compresseurs. Lorsque la température d'hélium nécessaire est inférieure à 4,3K, la pression de saturation est alors sub-atmosphérique (LP), et un étage de compression supplémentaire est alors nécessaire entre la pression sub-atmosphérique LP et la basse pression BP.

Les inventeurs ont constaté que le réglage de la puissance du réfrigérateur pour bien répondre aux besoins de réfrigération du Tokamak est difficile et demande beaucoup d'effort de la part des opérateurs. En particulier, la maîtrise de la régularité de la charge thermique du Tokamak est relativement difficile. En cas de mauvais réglage de la puissance du réfrigérateur les inventeurs ont constaté que le niveau d'hélium liquide tampon peut être constamment montant ou descendant d'un cycle à l'autre. Ceci a pour conséquence qu'il faut interrompre la séquence de génération des plasmas pour ramener le niveau d'hélium liquide dans le réservoir tampon à son état initial, ou à un niveau de remplissage donné, pour essayer de maintenir ce niveau le plus longtemps possible entre les seuils minimums et maximums, nécessaires pour un fonctionnement sécuritaire de l'installation.

L'article « Using Dynamic Simulation to support Helium Refrigerator Process Engineering » Proceedings of ICEC 22 - ICMC 2008, pages 39 - 44, auteurs Dauguet P.; Briend P.; Deschildre C. et Sequeira S.E. décrit un procédé de réfrigération dans lequel le dispositif de réfrigération est piloté pour maintenir des pressions de cycle de travail constantes et également de façon à maintenir constante la puissance électrique consommée par le dispositif de réfrigération. L'article <<ITER cryogenic system>> auteurs Kalinin V.; Tada E.; Millet F. et Shatil N. in Fusion Engineering and Design, vol. 81, no. 23-24, pages 2589-2595 décrit un procédé de réfrigération en charge pulsée d'un organe d'un Tokamak.

Un but de la présente invention est de pallier tout ou partie des inconvénients de l'art antérieur relevés ci-dessus. En particulier, but de la présente invention est de proposer un procédé et une installation de réfrigération améliorés par rapport à l'art antérieur.

A cette fin, le procédé selon l'invention, par ailleurs conforme à la définition générique qu'en donne le préambule ci-dessus, est essentiellement caractérisé en ce que pendant la phase de fonctionnement « périodique et symétrique » du Tokamak, la puissance de réfrigération du dispositif de réfrigération est régulée selon une variation forcée également de type « périodique et symétrique », c'est-à-dire que les durées respectives de génération d'un niveau de réfrigération élevée et de génération d'une puissance de réfrigération à un niveau bas différent au plus de 30%, et en ce que la variation de puissance de réfrigération réalise des augmentations et des diminutions de puissances de réfrigération progressives et en ce que l'augmentation de la puissance de réfrigération produite par le dispositif de réfrigération est déclenchée par anticipation, en réponse à un signal produit lors d'une étape de démarrage d'un plasma dans le Tokamak, c'est-à-dire avant que la charge thermique n'augmente au niveau de l'organe.

Par ailleurs, des modes de réalisation de l'invention peuvent comporter l'une ou plusieurs des caractéristiques suivantes :

- le cycle de travail comporte des portions soumettant le fluide de travail respectivement à une haute pression, une moyenne pression et une basse pression, pendant la phase de fonctionnement périodique et symétrique du Tokamak, au moins un parmi : le niveau de haute pression, le niveau de moyenne pression étant régulé selon une variation forcée de type « périodique et symétrique », c'est-à-dire que l'amplitude de la pression est régulée entre des valeurs respectivement supérieure et inférieure pendant des durées respectives qui diffèrent au plus de 30%,

- le niveau de haute pression et/ou le niveau de moyenne pression est régulé en modulant l'amplitude de la pression autour d'une valeur moyenne de pression prédéterminée respective,

- la modulation de l'amplitude de la pression est réalisée de façon automatique par une logique électronique mettant en oeuvre au moins l'un parmi : - une régulation en boucle fermée de type « Dérivée Intégrale Proportionelle » c'est-à-dire du type « PID » (PID= « Proportional Integral Derivative »),

- la modulation de l'amplitude de la pression est réalisée de façon automatique par une logique électronique mettant en oeuvre au moins l'un parmi :

- une régulation en boucle fermée de type « Dérivée Intégrale Proportionelle » c'est-à-dire du type « PID » (PID= « Proportional Integral Derivative »),
- une régulation à commande itérative sur une loi de commande adaptative tel que du type moindre carrés (« LMS » = « Last Mean Square »),une commande du type à régulation quadratique linéaire (« LQR »= « Linear Quadratic Regulator »),
- une régulation à commande itérative sur une loi de commande adaptative tel que du type moindre carrés (« LMS » = « Last Mean Square »),
- une commande du type à régulation quadratique linéaire (« LQR »= « Linear Quadratic Regulator »)
- le procédé comporte au moins une période durant laquelle le dispositif de réfrigération liquéfie du fluide de travail et stocke du fluide liquéfié dans une réserve tampon en vue de son utilisation pour restituer de la puissance de réfrigération en cas de phase de plasma, le niveau de haute pression et/ou le niveau de moyenne pression et/ou de basse pression étant régulé en fonction du niveau liquide mesuré dans la réserve tampon et/ou en fonction de la valeur moyenne de ce niveau de liquide,
- le niveau de haute pression et/ou le niveau de moyenne pression et/ou de basse pression est régulé en fonction de la moyenne du carré de la valeur du niveau liquide mesuré dans la réserve tampon (RMS) (« RMS »= « Root Mean Square »),
- le niveau de haute pression et/ou le niveau de moyenne pression et/ou le niveau de basse pression est régulé en fonction de la valeur maximale du niveau de liquide mesurée dans la réserve tampon
- la puissance de réfrigération du dispositif de réfrigération est régulée pour d'une part consommer, lors d'une phase de plasma, du liquide de la réserve tampon à partir d'un niveau de liquide initial déterminé et pour, d'autre part, reconstituer dans la réserve ledit niveau de liquide initial en dehors des phases de plasma,
- la puissance de réfrigération du dispositif de réfrigération est régulée pour maintenir constante la valeur moyenne du niveau de liquide dans la réserve,
- le mode de fonctionnement périodique et symétrique du Tokamak génère une courbe de charge thermique de l'organe de type harmonique,
- la puissance de réfrigération du dispositif de réfrigération est régulée selon une variation forcée du type harmonique,
- le Tokamak réalise des plasmas de façon de durée Dp déterminée, les intervalles entre deux plasmas successifs ont une durée Dnp comprise entre 80% et 120% de la durée Dp des plasmas (Dnp=Dp±20%) et de préférence les intervalles entre deux plasmas successifs ont une durée Dnp comprise entre 90% et 110% de la durée Dp des plasmas (Dnp=Dp±10%),
- les durées respectives d'une part de génération d'un niveau de réfrigération élevée et, d'autre part, de génération d'une puissance de réfrigération à un niveau bas différent au plus de 20% et de préférence, d'au plus de 10%,
- le signal est généré lors d'une modification prédéterminée d'un paramètre physique observable au niveau du Tokamak,
- le signal est généré lors d'une modification prédéterminée de l'un au moins des paramètres physiques suivants : une augmentation prédéterminée de la température interne du Tokamak, un signal de commande manuel ou automatique de commutation du Tokamak dans une phase de génération d'un plasma, un signal électrique de mesure de pression et/ou de courant électrique et/ou de tension électrique et/ou de champ magnétique, ou un signal issu d'un d'instrument de mesure de type optique tel qu'une camera ou des fibres,
- au moins une partie de la puissance frigorifique produite par le réfrigérateur en excédant de la charge thermique est régulée sélectivement via un réchauffeur qui vaporise l'excédent d'hélium liquide produit et/ou via un système de by-pass froid qui renvoie sélectivement une partie de l'hélium issu de la boîte de refroidissement vers la station de compression,
- la diminution de la puissance de réfrigération produite par le dispositif de réfrigération à un niveau bas est déclenchée automatiquement en réponse à une variation déterminée de la charge thermique de l'organe, c'est-à-dire une variation déterminée du besoin de réfrigération de l'organe,
- la diminution de la puissance de réfrigération produite par le dispositif de réfrigération est déclenchée automatiquement en réponse à l'un au moins parmi : un signal de détection d'une baisse déterminée de température dans une boucle de fluide assurant un échange thermique entre l'organe et le fluide de travail, une remontée de niveau dans un stockage d'hélium liquide, un seuil d'ouverture d'un by-pass froid, un seuil de vitesse de turbine ou de compresseur froid,

L'invention peut ainsi consister à faire varier de façon forcée les niveaux de pression haute HP, de pression moyenne MP, et éventuellement de pression basse BP et/ou LP, du cycle de travail selon un régime périodique et symétrique, par exemple de façon harmonique ou d'une façon périodique qui s'en approche.
L'invention permet ainsi de réguler le réfrigérateur non plus avec des observables instantanés, mais avec des observables appropriés au régime harmonique comme :

- les valeurs moyennes du niveau d'hélium liquide mesuré dans la réserve tampon et/ou,
- la moyenne du carré du niveau d'hélium liquide mesuré dans la réserve tampon (« RMS » = Root Mean Square) et/ou,
- la valeur de niveau maximal du niveau d'hélium liquide mesuré dans la réserve tampon.

La régulation des pressions (MP et/ou HP et/ou BP) du cycle de travail peut alors être effectuée par modulation d'amplitude autour de valeurs moyennes respectives, en fonction de la valeur moyenne du carré du niveau du niveau (RMS). Cette solution permet de garantir qu'entre chaque cycle de génération de plasma, le niveau d'hélium liquide dans le réservoir tampon sera revenu à son état initial et que la valeur moyenne de ce niveau de liquide sera constante. Ceci présente l'avantage de permettre un fonctionnement continu et sans interruption du réfrigérateur, et donc indirectement du Tokamak, en régime harmonique stationnaire. C'est-à-dire que tous les paramètres physiques qui évoluent avec le fonctionnement du réfrigérateur et du Tokamak présentent des valeurs moyennes stationnaires, ou sont macroscopiquement stationnaires.

L'invention concerne également une installation de réfrigération en charge pulsée d'un organe d'un Tokamak, l'installation étant munie d'un dispositif de réfrigération comprenant un circuit formant un cycle de travail pour un fluide de travail tel que l'hélium, le circuit du dispositif de réfrigération comportant:

- une station de compression du gaz de travail munie d'au moins un compresseur,
- une boîte de pré-refroidissement/refroidissement comprenant au moins un échangeur de chaleur et au moins un organe de détente du gaz de travail sortant de la station de compression,
- un système d'échange thermique entre le fluide de travail refroidit et l'organe,
- un système de renvoi du fluide ayant échangé thermiquement avec l'organe vers la station de compression,

l'installation comprenant une logique électronique de pilotage du dispositif de réfrigération assurant une régulation de la puissance de réfrigération produite par ledit dispositif de réfrigération, pour augmenter ponctuellement cette puissance de réfrigération à un niveau relativement élevé lorsque le Tokamak est dans une phase de génération d'un plasma, l'installation étant caractérisée en ce que le Tokamak comprend un émetteur d'un signal de déclenchement à chaque démarrage d'une génération d'un plasma, la logique électronique comprenant un récepteur dudit signal de déclenchement pour commander automatiquement l'augmentation de la puissance de réfrigération produite par le dispositif (2) de réfrigération à la réception de ce signal et en ce que la logique électronique de pilotage est configurée pour sélectivement réguler la puissance de réfrigération du dispositif de réfrigération selon une variation forcée également de type « périodique et symétrique » en réponse audit signa.

Selon d'autres particularités possibles :

- l'installation peut comprendre un capteur mesurant la valeur d'un paramètre physique observable au niveau du Tokamak et représentatif du démarrage d'une génération d'un plasma, ledit capteur envoyant une information à l'émetteur en vue d'informer la logique électronique de pilotage,
- le capteur comprend au moins un parmi : un capteur d'une température interne ou externe du Tokamak, un capteur de commutation de la commande manuel ou automatique de commutation du Tokamak d'une phase dite « de veille » vers une phase de génération d'un plasma, ou tout autre capteur électrique présent dans l'instrumentation du Tokamak,
- la boîte de pré-refroidissement/refroidissement comprend une réserve tampon de fluide liquéfié lors du cycle de travail, un réchauffeur sélectivement activable pour vaporiser une partie du fluide liquéfié de la réserve, un circuit d'échange thermique sélectif entre le fluide de la réserve et l'organe, l'installation comportant un capteur mesurant la charge thermique de l'organe, c'est-à-dire un capteur mesurant la valeur d'une grandeur représentative du besoin de réfrigération de l'organe à refroidir, le capteur mesurant la charge thermique de l'organe adressant un signal à la logique électronique de pilotage, ladite logique électronique de pilotage étant programmée pour diminuer la puissance de réfrigération produite par le dispositif de réfrigération à un niveau relativement bas en réponse à un signal de détection d'une baisse déterminée de la charge thermique de l'organe,
- le capteur mesurant la charge thermique de l'organe comprend l'un au moins parmi : un capteur de température dans une boucle de fluide assurant sélectivement l'échange thermique entre l'organe et le fluide de travail, un capteur de pression, une mesure de puissance électrique des réchauffeurs, une mesure de vitesse de turbines et/ou de compresseurs froids du dispositif de réfrigération.

L'invention peut concerner également tout dispositif ou tout procédé alternatif comprenant toute combinaison des caractéristiques ci-dessus ou ci-dessous.
L'invention permet ainsi, pour un Tokamak fonctionnant de façon « périodique et symétrique », de réguler de façon automatisée la puissance de réfrigération du réfrigérateur en minimisant la consommation d'hélium liquide. Comme cela sera décrit ci-après, l'invention permet de diminuer la consommation énergétique globale du réfrigérateur. L'invention permet notamment de diminuer la durée d'utilisation du réfrigérateur à sa puissance de réfrigération maximum.

La présente invention n'est pas restrictive aux modes de fonctionnement strictement sinusoïdaux, mais est applicable à tout régime périodique qui s'en approche, c'est-à-dire qui présente des phases de forte puissance et de faible puissance dont les durées sont proches ou égales. Par exemple l'invention est également applicable à un mode de fonctionnement dont le signal de charge thermique peut s'approcher de créneaux périodiques, de triangles périodiques, de demi-sinus périodiques ou tout autre.

D'autres particularités et avantages apparaîtront à la lecture de la description ci-après, faite en référence aux figures dans lesquelles :

- la figure 1 représente de façon schématique et partielle la structure et le fonctionnement d'une installation de réfrigération d'un Tokamak selon l'invention,
- la figure 2 représente de façon schématique et partielle la structure et le fonctionnement d'une installation de réfrigération d'un Tokamak selon un autre exemple de réalisation de l'invention,
- la figure 3 représente, sur un même graphique, un exemple de signal sinusoïdal de variation, en fonction du temps, de la charge thermique CT d'un organe d'un Tokamak et de deux signaux CC, CH de consigne de pression de cycle en fonction du temps (t) d'un réfrigérateur associé, respectivement en créneau et de forme harmonique.

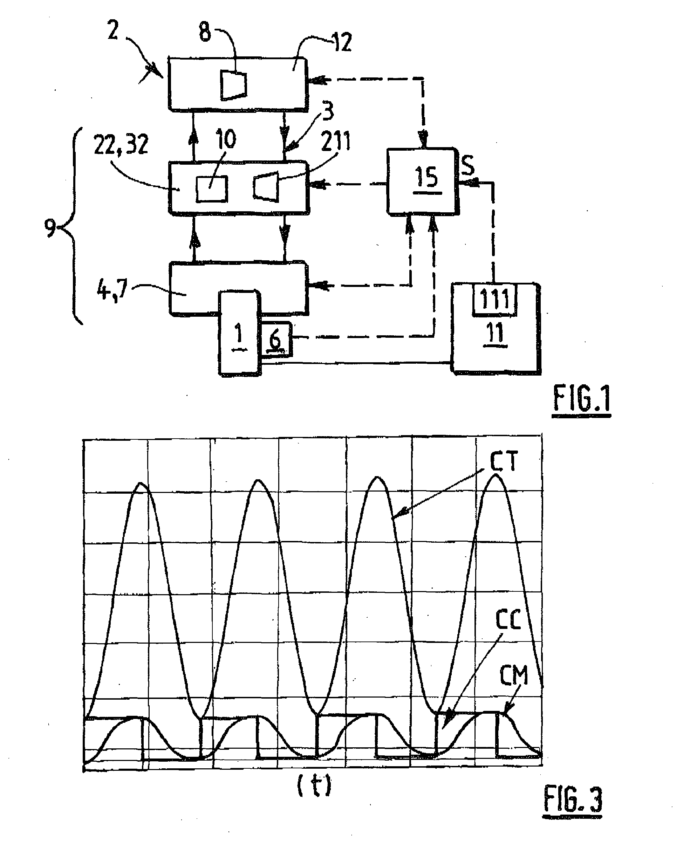

Le principe général de fonctionnement va à présent être décrit en référence à la figure 1.

L'installation de réfrigération schématisée à la figure 1 comprend classiquement un dispositif 2 de réfrigération comprenant un circuit soumettant de l'hélium à un cycle de travail pour produire du froid.

Le circuit du dispositif de réfrigération 2 comprend une station 12 de compression munie d'au moins un compresseur 8 qui assure une compression de l'hélium. En sortie de la station de compression 2, l'hélium entre dans une boîte 32 de refroidissement (avec éventuellement une boîte 22 de pré-refroidissement). La boîte 22, 32 de refroidissement/pré-refroidissement comprend un ou plusieurs échangeurs 10 qui échangent thermiquement avec l'hélium pour refroidir ce dernier.

La boîte 22, 32 de refroidissement/pré-refroidissement comprend une ou plusieurs turbines 211 pour détendre l'hélium. De préférence, la boîte 22, 32 de refroidissement/pré-refroidissement fonctionne selon un cycle de type Brayton.

Au moins une partie de l'hélium est liquéfié à la sortie de la boîte 22, 32 de refroidissement/pré-refroidissement et un circuit 4, 7 est prévu pour assurer un échange thermique sélectif entre l'hélium liquide et un organe 1 à refroidir d'un Tokamak. L'organe 1 à refroidir comprend par exemple un générateur de champ magnétique obtenu à l'aide d'un aimant supraconducteur et/ou une ou des unités de pompage par cryo-condensation.

Le circuit 4, 7 d'échange thermique peut comprendre, par exemple, un réservoir 4 stockant une réserve d'hélium liquéfié et des conduites et un ou des échangeurs assurant un échange thermique indirect entre l'organe 1 et l'hélium liquide.

Au moins une partie de l'hélium réchauffé au cours de l'échange thermique avec l'organe 1 est renvoyé vers la station de compression. Lors du retour vers la station de compression 2, l'hélium peut céder des frigories aux échangeurs 10 qui refroidissent l'hélium sortant de la station 12 de compression.

Lorsqu'un plasma est généré dans le Tokamak 11, l'organe 1 a une charge thermique plus importante (c'est-à-dire un besoin de réfrigération plus important). La puissance de réfrigération du dispositif de réfrigération 2 doit donc être augmentée.

L'installation possède une logique 15 électronique de pilotage du dispositif 2 de réfrigération qui permet notamment de réguler la puissance de réfrigération produite par ledit dispositif 2 de réfrigération. En particulier, la logique 15 électronique permet d'augmenter ponctuellement cette puissance de réfrigération à un niveau relativement élevé (par exemple une réfrigération maximale) lorsque le Tokamak 11 est dans une phase de génération d'un plasma. De même, la logique 15 électronique commande la diminution de cette puissance de réfrigération à un niveau relativement bas (par exemple niveau minimal déterminé) lorsque le Tokamak 11 n'est plus dans une phase de génération d'un plasma.

La variation de la puissance de réfrigération produite par le dispositif 2 de réfrigération est réalisée classiquement en modifiant la pression P de cycle, c'est-à-dire le niveau de pression (BP et/ou MP et/ou HP) de la compression 12 auquel l'hélium est soumis au cours du cycle de travail.

La variation de la puissance de réfrigération produite par le dispositif 2 de réfrigération peut également être réalisée le cas échéant en modifiant le débit de cycle, c'est-à-dire en en modifiant le débit d'hélium circulant dans le cycle de travail.

Pour répondre au besoin de refroidissement d'un organe 1 d'un Tokamak générant des plasma de façon périodique et symétrique (notamment selon un régime harmonique qui s'approche d'un régime sinusoïdal), la puissance de réfrigération du dispositif 2 de réfrigération est régulée selon une variation forcée également de type « périodique et symétrique » et l'augmentation de la puissance de réfrigération produite par le dispositif 2 de réfrigération est déclenchée de façon anticipée, avant que la charge thermique ne se fasse ressentir au niveau de l'organe 1. De plus, de préférence, la variation de puissance de réfrigération réalise des augmentations et des diminutions de puissances de réfrigération progressives et non pas de type « tout ou rien ».

L'anticipation de l'augmentation de la puissance de réfrigération est obtenue en se basant par exemple sur un signal S produit lors d'une étape de démarrage d'un plasma dans le Tokamak 11.

Ainsi, contrairement à l'art antérieur, l'installation selon l'invention ne déclenche pas l'augmentation de la puissance de réfrigération du dispositif 2 en réponse à une information sur la courbe de chauffe d'un réchauffeur de la réserve d'hélium liquide. Au contraire, cette commutation entre un mode de fonctionnement avec une puissance de réfrigération basse et un mode de fonctionnement avec une puissance de réfrigération haute est automatique et anticipée par rapport à l'information pertinente de la courbe de chauffe du réchauffeur.

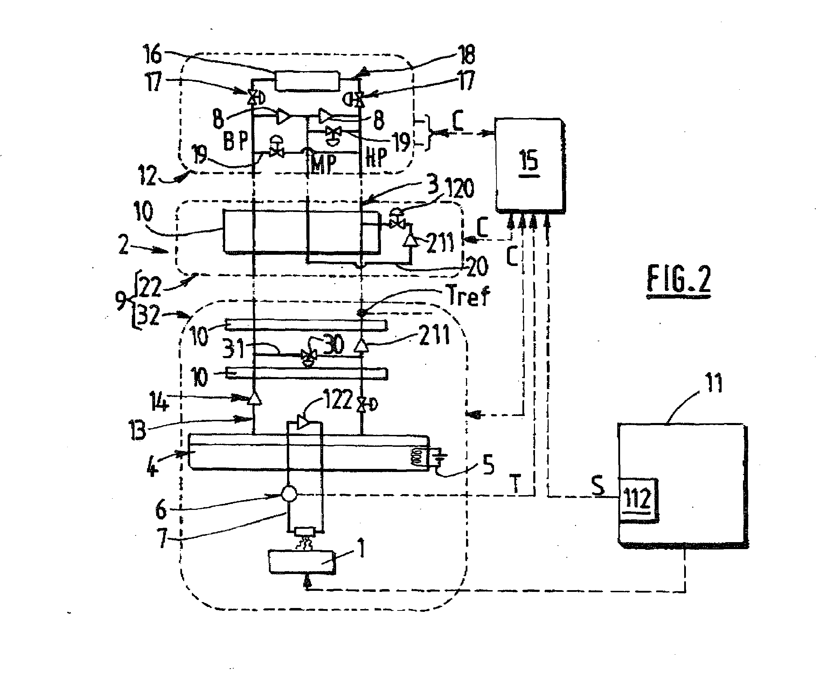

En particulier, dans l'installation selon l'invention, le Tokamak 11 comprend un émetteur d'un signal S lors d'un démarrage d'un plasma (cf. figure 2). Ce signal S est envoyé (par fil ou sans fil) à la logique 15 électronique. La logique 15 électronique peut comprendre à cet effet un récepteur dudit signal S. A la réception de ce signal S, la logique 15 électronique commande automatiquement l'augmentation de la puissance de réfrigération produite par le dispositif 2 de réfrigération.

Le signal S représentatif du démarrage d'un plasma dans le Tokamak est basé par exemple sur un paramètre physique observable au niveau ou en amont du Tokamak 11 (et non pas en aval du Tokamak 11 comme cela était le cas dans l'art antérieur).

Par exemple, et sans que ce soit limitatif, le paramètre physique pris en compte pour détecter un démarrage d'une phase de plasma peut comprendre l'un au moins parmi : une valeur seuil de température interne du Tokamak, un signal de commande électrique, une commande manuel d'un opérateur démarrant, ou tout autre moyen équivalent, une mesure de pression et/ou de courant et/ou de tension et/ou de champ magnétique.

Cette particularité avantageuse permet de détecter le démarrage de la phase de génération d'un plasma et permet d'exploiter la constante de temps de transfert de charge thermique entre le coeur du Tokamak (la zone de génération du plasma) et l'interface thermique du réfrigérateur (organe 1 à refroidir). De cette façon, l'installation tient compte de l'inertie du système pour anticiper le besoin accru de refroidissement avant qu'il ne se fasse ressentir au niveau de l'organe 1.

Grâce à l'invention, le changement de régime de puissance de réfrigération est ainsi effectué de sorte que cette puissance maximum du réfrigérateur est immédiatement disponible à l'arrivée de la charge thermique accrue.

Ceci permet de faire varier les pressions du cycle de façon lente et sans à-coups, avant que l'effet de la charge thermique ne soit ressenti sur un bain d'hélium tampon. Cette anticipation permet d'ailleurs d'optimiser la consommation énergétique du réfrigérateur, et de limiter les amplitudes de variation du niveau d'hélium liquide.

Dans le cas particulier d'un régime harmonique, cette anticipation permet également de générer une avance de phase qui a un effet stabilisant et qui améliore la robustesse de la régulation. Pour compenser la puissance du réfrigérateur produite en excédent (délibérément augmentée avant l'effet de la charge thermique), une solution peut consister à prévoir un système dit de by-pass froid dans le réfrigérateur.

Un by-pass 31 froid peut ainsi être prévu facultativement en aval de la dernière turbine pour renvoyer sélectivement directement ou indirectement une partie de l'hélium de la boîte 22 de refroidissement vers la station 12 de compression. Un tel système 30, 31 permet de lisser avantageusement les pressions et les débits du cycle (cf. figure 2). Ceci permet également de limiter les amplitudes de variation de température de la boite 12 de refroidissement (un principe de fonctionnement d'un tel by-pass froid est décrit par exemple dans le document WO2009/024705). Cette solution permet d'éviter la consommation énergétique non négligeable d'un réchauffeur, et de limiter judicieusement les amplitudes de variation de température dans la boite froide.

L'utilisation du réchauffeur et/ou d'un by-pass froid permet d'utiliser l'éventuelle puissance de réfrigération produite en excédent pour abaisser la température des échangeurs de chaleur de la boîte 32 de refroidissement. Ceci permet de réduire le débit dans les turbines des étages de la boîte 32 de refroidissement.

La figure 2 illustre ce fonctionnement pour un exemple non limitatif de réfrigérateur 2.

La station 12 de compression de l'installation de la figure 2 comprend deux compresseurs 8. Les compresseurs définissent par exemple trois étages de pression : un niveau de basse pression BP (à l'entrée de la station 12 de compression), un niveau de moyenne pression MP (à la sortie du premier compresseur 8) et un niveau de haute pression HP (à la sortie du second compresseur 8).

Comme représenté, la station 12 de compression peut comprendre une conduite 18 de dérivation vers un stockage 16 tampon. Un système de vannes 17 permet de réguler le transfert d'hélium entre le circuit 3 de travail et le stockage 16 tampon. De même, classiquement, des conduites 19 munie de vannes respectives peuvent être prévue pour assurer des retours sélectifs d'hélium compressé à certains étages de compression.

A la sortie de la station 12 de compression, l'hélium est admis dans une boîte 22 de pré-refroidissement dans laquelle cet hélium est refroidi par échange thermique avec un ou plusieurs échangeurs 10 et éventuellement détendu dans des turbines 211.

Une conduite 20 munie d'une vanne 120 peut également être prévue pour renvoyer sélectivement de l'hélium de la boîte de pré-refroidissement vers la station 12 de compression.

L'hélium à haute pression est ensuite admis dans une boîte 32 de refroidissement. L'hélium est refroidi par échange thermique avec un ou plusieurs échangeurs 10 et éventuellement détendu dans un ou des turbines 211.

Comme expliqué précédemment, une conduite 31 de by-pass froid munie d'une vanne 30 peut être prévue pour renvoyer sélectivement de l'hélium de détendu vers la station 12 de compression.

L'hélium liquéfié dans la boîte de refroidissement est principalement stocké dans une réserve 4. Cette réserve 4 d'hélium liquide constitue une réserve de frigories destinée à échanger thermiquement avec l'organe 1 à refroidir. Le refroidissement est réalisé par exemple via un circuit 7 en boucle et muni d'une pompe 122.

L'hélium réchauffé issu de la réserve 4 est ensuite renvoyé vers la station 12 de compression (par exemple via une conduite 13 éventuellement munie d'un compresseur 14).

Lors du son retour, l'hélium peut céder des frigories aux échangeurs 10 des boîtes de refroidissement 32 et de pré-refroidissement 22.

Une logique 15 électronique (qui peut comprendre un microprocesseur) est reliée à la station 12 de compression pour réguler la puissance de réfrigération (signaux de commande C des différents organes : vannes, compresseurs, turbines). La logique 15 électronique est également est reliée aux boîtes de refroidissement 32 et de pré-refroidissement 22 (signaux de commande C des différents organes: vannes, turbines, réchauffeurs). En particulier, la logique électronique 15 commande le réchauffeur 5 de la réserve 4 pour réguler le niveau d'hélium liquide dans cette dernière.

Selon l'invention, le Tokamak 11 peut comprendre un capteur 111 mesurant la valeur d'un paramètre physique observable au niveau du Tokamak 11 et représentatif du démarrage d'un plasma (cf. figure1). Le capteur est relayé par un émetteur 112 qui envoie l'information à un récepteur de la logique 15 électronique.

Avantageusement, un capteur 6 de température T sur la boucle 7 de fluide qui circule entre le réfrigérateur et l'organe 1 informe également la logique 15 électronique. Lorsque cette température T mesurée décroît (c'est-à-dire que les besoins de réfrigération diminuent du fait de la fin de la phase de plasma), la logique 15 électronique commande C la diminution de la consigne de puissance de réfrigération. Bien entendu, la fin de la phase de plasma peut être détectée par tout autre moyen par exemple via la courbe de chauffe du réchauffeur 5, via un paramètre au niveau du Tokamak, ou via d'autres observables internes au réfrigérateur comme par exemple les vitesses des turbines, ou les compresseurs froids.

En effet, s'il est délibérément choisi de ne pas réguler les vitesses des turbines, celles-ci vont naturellement varier en fonction du besoin, et vont devenir des indicateurs de la charge thermique appliquée sur la réserve 4 d'hélium liquide.

Ces deux paramètres (signal S de démarrage d'une phase de plasma et température de fin de phase de plasma) peuvent être utilisés dans schéma de contrôle dit en commande prédictive (« feed forward »).

C'est-à-dire que l'un au moins parmi :

- la courbe de consigne de pression dans le cycle de travail,
- la courbe de commande de la fréquence d'un éventuel variateur de cycle (pour piloter le débit d'hélium dans le circuit de travail),
- le pilotage de l'ouverture du by-pass froid 30

peut être défini par un calculateur numérique, par exemple intégré dans la logique 15 électronique. Le calculateur numérique peut utiliser par exemple une simple fonction arithmétique paramétrable ou bien un modèle interne de prédiction d'état pour obtenir une régulation plus fine, en vue d'une consommation énergétique optimale.

Lorsque le signal de déclenchement d'un plasma est reçu par le dispositif 2, 15, la consigne de pression maximum est donnée à la station 12 de compression. A cet instant, le dispositif 2 de réfrigération est encore en mode de fonctionnement réduit, et la vanne 30 de by-pass froid est ouverte (la température de référence Tref du fluide en amont du by-pass augmente).

Cette ouverture du by-pass froid limite la puissance du réfrigérateur. La pression réelle appliquée dans la station 12 de compression et les effets résultant dépendront de la méthode numérique de régulation employée pour piloter la station de compression. La régulation peut utiliser un modèle interne prédéfini, une commande du type « PID », des commandes multivariables de type LQR ou autre.

Lorsque la charge thermique augmente sur la réserve 4, la vanne 30 de bypass froid est fermée. La température Tref du bypass décroît pour fournir le maximum de puissance de réfrigération à l'organe 1.

Une régulation optimale de la pression est obtenue. Ceci se traduit par une économie d'énergie significative.

On s'intéresse à présent à un fonctionnement périodique et symétrique du Tokamak 11, par exemple avec des plasmas générant une charge thermique de l'organe 1 harmonique de type sinusoïdal.

L'anticipation de la charge thermique, c'est-à-dire l'anticipation des augmentations de la puissance de réfrigération délivrée par le réfrigérateur peut être effectuée en utilisant un signal de base périodique en créneau.

Ce signal de base peut être utilisé comme consigne amont, donnant les commandes de pression maximum et minimum dans la station de compression 12 (consignes respectives pour la haute pression HP et/ou pour la moyenne pression MP et/ou pour la basse pression BP). Comme vu précédemment, la consigne de pression maximum est donnée par un signal S généré lors d'un démarrage d'un plasma. Comme décrit ci-dessus, la consigne de pression minimum peut être donnée en réponse à un observable interne au réfrigérateur, comme par exemple une température, une pression, une vitesse de turbine, ou une vitesse de compresseur centrifuge froid.

De préférence, cette consigne d'anticipation en créneau (cf. signal CC figure 3) n'est pas utilisée directement car elle induirait des à-coups trop importants dans la commande du réfrigérateur (pression, débit dans le cycle de travail). Ainsi, selon l'invention, le signal de commande de base en créneau CC est transformé signal progressif, par exemple quasi harmonique (cf. CH figure 3). A cet effet, un filtre de consigne peut être utilisé pour générer une commande progressive du réfrigérateur.

Par exemple un filtre polynomial de type passe-bas et d'ordre six peut transformer ce signal de base en créneaux CC en un signal de commande CH quasi sinusoïdal.

La constante de temps de ce filtre peut être un paramètre d'ajustement pour l'opérateur, pour régler parfaitement le phasage du pilotage des pressions avec la charge thermique de l'organe 1. Par exemple, les pressions de la station 12 de compression peuvent être mises en phase avec la vitesse de la turbine 211 la plus froide de la boîte de refroidissement 32. En régime harmonique, le bon phasage des consignes de commande CH du réfrigérateur avec la charge thermique CT est important voir indispensable pour réaliser une modulation d'amplitude de pression efficace.

La figure 3 met en évidence, dans un exemple non limitatif, l'anticipation de la commande CH de pression de cycle du réfrigérateur par rapport à la charge thermique CT. Cette figure 3 illustre également le caractère périodique et symétrique forcé du signal progressif CH de commande de la pression de cycle du réfrigérateur. C'est-à-dire que la puissance de réfrigération du réfrigérateur est modulée de façon harmonique progressive et avec anticipation par rapport à la charge thermique de l'organe 1 à refroidir.

Lorsque le phasage est paramétré, la logique 15 de commande peut commander une modulation d'amplitude des pressions MP, HP, BP du cycle de travail.

Les valeurs moyennes de la pression haute HP et de la pression moyenne MP et du cycle sont des paramètres qui sont de préférence ajustés par l'opérateur.

L'amplitude de variation de la pression autour de ces valeurs moyennes respective est un paramètre régulé de préférence automatiquement par un régulateur, par exemple dans la logique 15 électronique.

Ce régulateur peut être une commande de type « PID » c'est-à-dire du type à « Dérivée Intégrale Proportionelle » (« Proportional Intégral Dérivative »).

La commande peut également être du type itérative sur une loi de commande adaptative, par exemple de type des moindres carrés « LMS » (« Last Mean Square ») adaptée pour les processus mono variable en régime harmonique.

L'observable de ce régulateur peut être, par exemple, la valeur moyenne du carré du niveau d'hélium liquide mesuré dans la réserve 4 (« RMS »=« Root Mean Square »).

L'utilisation de la valeur moyenne du carré du niveau d'hélium liquide mesuré dans la réserve 4 (RMS) permet de maintenir le niveau de remplissage d'hélium liquide initial, sans réguler la valeur du niveau en lui-même.

L'opérateur peut néanmoins choisir de réguler la valeur moyenne du niveau plutôt que la valeur RMS. L'opérateur doit alors interrompre la modulation d'amplitude, c'est-à-dire garder une amplitude de variation constante, et utiliser un second régulateur qui agit sur la valeur moyenne de l'amplitude des pressions et non plus sur l'amplitude de variation.

Une fois que la valeur moyenne souhaitée du niveau d'hélium liquide est atteinte il est préférable de revenir à un mode de modulation d'amplitude car ce mode va non seulement permettre de maintenir ce niveau de liquide moyen constant, mais va aussi permettre de déterminer la variation d'amplitude de niveau optimale qui minimise la consommation énergétique moyenne du réfrigérateur.

L'invention combine donc différents processus de régulation, d'anticipation, et de modulation, qui permettent à l'opérateur de réduire au minimum la consommation énergétique du réfrigérateur.

Compte tenu des écarts d'amplitudes de pression que l'invention propose de réaliser, il peut s'avérer nécessaire, pour le pilotage des vannes de la station 12 de compression, d'utiliser une commande plus performante que les méthodes classiquement mise en oeuvre avec des régulations de type « PID »= « Dérivée Intégrale Proportionelle ».

Une solution possible est d'utiliser une commande de type « LQR » du type à régulation quadratique linéaire (= « Linéar Quadratic Regulator ») qui utilise plusieurs variables. Cette commande peut associer à la fois une mesure des pressions de l'hélium dans le cycle 3 (variables régulées) et une mesure des perturbations (débit d'hélium dans le cycle BP et MP) en exploitant les observables disponibles à l'intérieur ou au niveau du réfrigérateur (tels que pressions, températures, vitesses des turbines, vitesses des compresseurs froids).

Le procédé selon l'invention ne constitue donc pas une simple adaptation des pressions de cycle aux besoins de réfrigération. Il s'agit au contraire d'un choix délibéré de réguler les pressions de cycle (notamment la HP et/ou la MP et éventuellement la BP) en régime forcé, de type périodique et symétrique (de type harmonique le cas échéant). La régulation de la pression du cycle du réfrigérateur (qui conditionne la régulation de la puissance de réfrigération du réfrigérateur) peut être réalisée selon une logique de contrôle prédictif (« Feed Forward »).

Un intérêt de cette méthode est l'utilisation non pas des valeurs instantanées des observables de régulation, mais des valeurs moyenne (« RMS » par exemple). Ceci permet de faire de la modulation d'amplitude de pression et permet d'utiliser des méthodes propres au régime harmonique pour optimiser la consommation énergétique du réfrigérateur, en combinant les avantages de l'anticipation et de la modulation.

L'invention permet ainsi de garantir un fonctionnement continu et sans interruption du Tokamak, en minimisant sa consommation énergétique.

L'invention permet en particulier de réduire la consommation énergétique globale de l'installation au fur et à mesure de l'enchaînement des plasmas, en particulier lorsque le Tokamak génère des plasmas de façon périodique et symétrique, notamment selon un régime harmonique.

**Revendications**

1.  Procédé de réfrigération en charge pulsée d'un organe (1) d'un «Tokamak» (11), c'est-à-dire un organe (1) d'une installation (11) de génération intermittente d'un plasma, le procédé utilisant un dispositif (2) de réfrigération soumettant un fluide de travail tel que de l'hélium à un cycle (3) de travail comportant: une compression (12), un refroidissement et une détente (22, 211), un échange thermique (32) avec l'organe (1), un réchauffement, le Tokamak (11) comportant au moins un mode de fonctionnement dit « périodique et symétrique », c'est-à-dire un mode de fonctionnement durant lequel des plasmas de durée (Dp) déterminée sont générés de façon périodique avec des intervalles entre deux plasmas successifs ayant une durée (Dnp) différant au plus de 30% par rapport à la durée (Dp) des plasmas (Dnp=Dp±30%), selon le procédé, la puissance de réfrigération produite par le dispositif (2) de réfrigération étant augmentée à un niveau relativement élevé lorsque le Tokamak (11) est dans une phase de génération d'un plasma (Dp) tandis que la puissance de réfrigération produite par le dispositif (2) de réfrigération est diminuée à un niveau relativement bas lorsque le Tokamak (11) n'est plus dans une phase de génération d'un plasma (Dnp), **caractérisé en ce que** pendant la phase de fonctionnement « périodique et symétrique » du Tokamak (11), la puissance de réfrigération produite par le dispositif (2) de réfrigération est régulée selon une variation forcée également de type « périodique et symétrique », c'est-à-dire que les durées respectives de génération d'un niveau de réfrigération élevée et de génération d'une puissance de réfrigération à un niveau bas diffèrent au plus de 30%, et **en ce que** la variation de puissance de réfrigération réalise des augmentations et des diminutions de puissances de réfrigération progressives et **en ce que** l'augmentation de la puissance de réfrigération produite par le dispositif (2) de réfrigération est déclenchée par anticipation, en réponse à un signal (S) produit lors d'une étape de démarrage d'un plasma dans le Tokamak (11), c'est-à-dire avant que la charge thermique n'augmente au niveau de l'organe (1).

2.  Procédé selon la revendication 1, **caractérisé en ce que** le cycle (3) de travail comporte des portions soumettant le fluide de travail respectivement à une haute pression (HP), une moyenne pression (MP) et une basse pression (BP) et **en ce que**, pendant la phase de fonctionnement périodique et symétrique du Tokamak, au moins un parmi : le niveau de haute pression (HP), le niveau de moyenne pression (MP) est régulé selon une variation forcée de type « périodique et symétrique », c'est-à-dire que l'amplitude de la pression (MP, HP) est régulée entre des valeurs respectivement supérieure et inférieure pendant des durées respectives qui diffèrent au plus de 30%.

3.  Procédé selon la revendication 2, **caractérisé en ce que** le niveau de haute pression (HP) et/ou le niveau de moyenne pression (MP) est régulé en modulant l'amplitude de la pression autour d'une valeur moyenne de pression prédéterminée respective.

4.  Procédé selon la revendication 3, **caractérisé en ce que** la modulation de l'amplitude de la pression est réalisée de façon automatique par une logique électronique mettant en oeuvre au moins l'un parmi :

    - une régulation en boucle fermée de type « Dérivée Intégrale Proportionelle » c'est-à-dire du type « PID » (PID= « Proportional Integral Derivative »),
    - une régulation à commande itérative sur une loi de commande adaptative tel que du type moindre carrés (« LMS » = « Last Mean Square »),
    - une commande du type à régulation quadratique linéaire (« LQR »= « Linear Quadratic Regulator »).

5.  Procédé selon l'une quelconque des revendications 2 à 4, **caractérisé en ce que** le procédé comporte au moins une période durant laquelle le dispositif (2) de réfrigération liquéfie du fluide de travail et stocke du fluide liquéfié dans une réserve (4) tampon en vue de son utilisation pour restituer de la puissance de réfrigération en cas de phase de plasma, et **en ce que** le niveau de haute pression (HP) et/ou le niveau de moyenne pression (MP) et/ou de basse pression est régulé en fonction du niveau liquide mesuré dans la réserve (4) tampon et/ou en fonction de la valeur moyenne de ce niveau de liquide.

6.  Procédé selon la revendication 5, **caractérisé en ce que** le niveau de haute pression (HP) et/ou le niveau de moyenne pression (MP) et/ou de basse pression est régulé en fonction de la moyenne du carré de la valeur du niveau liquide mesuré dans la réserve (4) tampon (RMS) (« RMS »= « Root Mean Square »).

7.  Procédé selon l'une quelconque des revendications 5 ou 6, **caractérisé en ce que** le niveau de haute pression (HP) et/ou le niveau de moyenne pression (MP) et/ou de basse pression est régulé en fonction de la valeur maximale du niveau de liquide mesurée dans la réserve (4) tampon.

8. Procédé selon l'une quelconque des revendications 5 à 7, **caractérisé en ce que** la puissance de réfrigération produite par le dispositif (2) de réfrigération est régulée pour d'une part consommer, lors d'une phase de plasma, du liquide de la réserve (4) tampon à partir d'un niveau de liquide initial déterminé et pour, d'autre part, reconstituer dans la réserve (4) ledit niveau de liquide initial en dehors des phases de plasma.

9. Procédé selon l'une quelconque des revendications 5 à 8, **caractérisé en ce que** la puissance de réfrigération du dispositif (2) de réfrigération est régulée pour maintenir constante la valeur moyenne du niveau de liquide dans la réserve (4).

10. Procédé selon l'une quelconque des revendications 1 à 9, **caractérisé en ce que** la puissance de réfrigération du dispositif (2) de réfrigération est régulée selon une variation forcée du type harmonique.

11. Procédé selon l'une quelconque des revendications 1 à 10, **caractérisé en ce que** la régulation de la puissance de réfrigération produite par le dispositif de réfrigération est réalisée en contrôlant le niveau d'au moins une pression de cycle du fluide de travail dans le cycle de travail et/ou en régulant la vitesse de rotation de compresseurs utilisés dans le cycle de travail, notamment lors de la compression.

12. Procédé selon l'une quelconque des revendications 1 à 11, **caractérisé en ce que** la régulation de la puissance de réfrigération produite est réalisée en faisant varier de façon directe ou indirecte la puissance électrique consommée par le dispositif de réfrigération.

13. Installation de réfrigération en charge pulsée d'un organe (1) d'un « Tokamak» (11), l'installation étant munie d'un dispositif (2) de réfrigération comprenant un circuit formant un cycle de travail pour un fluide de travail tel que l'hélium, le circuit du dispositif (2) de réfrigération comportant:

- une station (12) de compression du gaz de travail munie d'au moins un compresseur (8),
- une boîte de pré-refroidissement/refroidissement (9) comprenant au moins un échangeur (10) de chaleur et au moins un organe (211) de détente du gaz de travail sortant de la station (2) de compression,
- un système (4, 7, 122) d'échange thermique entre le fluide de travail refroidit et l'organe (1),

- un système (13, 14, 10) de renvoi du fluide ayant échangé thermiquement avec l'organe (1) vers la station (12) de compression,

l'installation comprenant une logique (15) électronique de pilotage du dispositif (2) de réfrigération assurant une régulation de la puissance de réfrigération produite par ledit dispositif (2) de réfrigération, pour augmenter ponctuellement cette puissance de réfrigération à un niveau relativement élevé lorsque le Tokamak (11) est dans une phase de génération d'un plasma, l'installation étant **caractérisée en ce que** le Tokamak (11) comprend un émetteur (112) d'un signal (S) de déclenchement à chaque démarrage d'une génération d'un plasma, la logique (15) électronique comprenant un récepteur dudit signal (S) de déclenchement pour commander (C) automatiquement l'augmentation de la puissance de réfrigération produite par le dispositif (2) de réfrigération à la réception de ce signal (S) et **en ce que** la logique (15) électronique de pilotage est configurée pour sélectivement réguler la puissance de réfrigération du dispositif (2) de réfrigération selon une variation forcée également de type « périodique et symétrique » en réponse audit signal (S).

14. Installation selon la revendication 13, **caractérisée en ce que** la logique (15) électronique est configurée pour faire varier la puissance de réfrigération produite par le dispositif en contrôlant au moins une pression de cycle de fluide de travail dans le cycle de travail et/ou en contrôlant la vitesse de rotation de compresseurs utilisés dans le cycle de travail, notamment lors de la compression.

15. Installation selon l'une quelconque des revendications 13 ou 14, **caractérisée en ce que** la logique (15) électronique est configurée pour réguler directement ou indirectement la puissance électronique consommée par le dispositif de réfrigération.

**Patentansprüche**

1. Kühlverfahren mit pulsiertem Laden eines Teils (1) eines "Tokamak" (11), d.h. eines Teils (1) einer intermittierenden Plasmaerzeugungsanlage (11), wobei das Verfahren eine Kühlvorrichtung (2) benutzt, die ein Arbeitsfluid wie Helium einem Arbeitszyklus (3) unterzieht, das Folgendes beinhaltet: eine Kompression (12), eine Kühlung und eine Entspannung (22, 211), einen Wärmeaustausch (32) mit dem Teil (1), eine Erhitzung, wobei der Tokamak (11) wenigstens einen Betriebsmodus aufweist, "periodisch und symmetrisch" genannt, d.h. einen Betriebsmodus, in dem Plasmas von bestimmter Dauer (Dp) periodisch mit Intervallen zwischen zwei aufeinander folgenden Plasmas von einer Dauer (Dnp) erzeugt werden, die sich um mehr als 30 % in Bezug auf die Dauer (Dp) der Plasmas (Dnp=Dp±30 %) unterscheiden, wobei bei dem Verfahren die von der Kühlvorrichtung (2) erzeugte Kühlleistung auf ein relativ hohes Niveau erhöht wird, wenn der Tokamak (11) in einer Plasmaerzeugungsphase (Dp) ist, während die von der Kühlvorrichtung (2) erzeugte Kühlleistung auf ein relativ niedriges Niveau verringert wird, wenn der Tokamak (11) nicht mehr in einer Plasmaerzeugungsphase (Dnp) ist, **dadurch gekennzeichnet, dass** während der "periodischen und symmetrischen" Betriebsphase des Tokamak (11) die von der Kühlvorrichtung (2) erzeugte Kühlleistung gemäß einer erzwungenen Variation ebenfalls des Typs "periodisch und symmetrisch" reguliert wird, d. h. dass die jeweiligen Dauern der Erzeugung eines erhöhten Kühlniveaus und der Erzeugung einer Kühlleistung auf einem tiefen Niveau sich um mehr als 30 % unterscheiden, und dadurch, dass die Kühlleistungsvariation progressive Erhöhungen und Verringerungen von Kühlleistungen bewirkt, und dadurch, dass die Erhöhung der von der Kühlvorrichtung (2) erzeugten Kühlleistung durch Vorgriff als Reaktion auf ein Signal (S) ausgelöst wird, das in einer Anlaufstufe eines Plasmas im Tokamak (11) erzeugt wird, d.h. bevor die thermische Ladung auf das Niveau des Teils (1) ansteigt.

2. Verfahren nach Anspruch 1, **dadurch gekennzeichnet, dass** der Arbeitszyklus (3) Abschnitte beinhaltet, die das Arbeitsfluid jeweils mit einem hohen Druck (HP), einem mittleren Druck (MP) und einem tiefen Druck (BP) beaufschlagen, und dadurch, dass während der periodischen und symmetrischen Betriebsphase des Tokamak wenigstens eines der folgenden erfolgt: der hohe Druckpegel (HP), der mittlere Druckpegel (MP) werden gemäß einer erzwungenen Variation des Typs "periodisch und symmetrisch" reguliert, d.h. die Amplitude des Drucks (MP, HP) wird zwischen den jeweiligen oberen und unteren Werten während der jeweiligen Dauern reguliert, die sich um mehr als 30 % unterscheiden.

3. Verfahren nach Anspruch 2, **dadurch gekennzeichnet, dass** der hohe Druckpegel (HP) und/oder der mittlere Druckpegel (MP) durch Modulieren der Amplitude des Drucks um einen jeweiligen vorbestimmten mittleren Druckwert reguliert wird/werden.

4. Verfahren nach Anspruch 3, **dadurch gekennzeichnet, dass** die Modulation der Amplitude des Drucks automatisch durch eine elektronische Logik ausgeführt wird, die wenigstens eines der folgenden ausführt:

   - eine Regelung im geschlossenen Kreislauf des Typs "differential integral proportional", d.h. vom Typ "PID" (PID = proportional integral differential),
   - eine Regelung mit iterativer Steuerung gemäß einem adaptiven Steuergesetz wie vom Kleinste-Quadrate-Typ ("LMS" = "Least Mean Square"),
   - eine Steuerung des Typs linearer quadratischer Regler ("LQR" = "Linear Quadratic Regulator").

5. Verfahren nach einem der Ansprüche 2 bis 4, **dadurch gekennzeichnet, dass** das Verfahren wenigstens eine Periode beinhaltet, während der die Kühlvorrichtung (2) Arbeitsfluid verflüssigt und verflüssigtes Fluid in einer Pufferreserve (4) zwecks Nutzung zum Zurückstellen der Kühlleistung im Falle der Plasmaphase speichert, und dadurch, dass der Hochdruckpegel (HP) und der Mitteldruckpegel (MP) und/oder der Niederdruckpegel in Abhängigkeit von dem gemessenen Flüssigkeitspegel in der Pufferreserve (4) und/oder in Abhängigkeit vom Mittelwert dieses Flüssigkeitspegels reguliert werden.

6. Verfahren nach Anspruch 5, **dadurch gekennzeichnet, dass** der Hochdruckpegel (HP) und/oder der Mitteldruckpegel (MP) und/oder der Niederdruckpegel in Abhängigkeit vom Mittel des Quadrats des Wertes des in der Pufferreserve (4) gemessenen Flüssigkeitspegels (RMS) ("RMS" = "Root Mean Square") reguliert wird/werden.

7. Verfahren nach Anspruch 5 oder 6, **dadurch gekennzeichnet, dass** der Hochdruckpegel (HP) und/oder der Mitteldruckpegel (MP) und/oder der Niederdruckpegel in Abhängigkeit vom maximalen Wert des in der Pufferreserve (4) gemessenen Flüssigkeitspegels reguliert wird/werden.

8. Verfahren nach einem der Ansprüche 5 bis 7, **dadurch gekennzeichnet, dass** die von der Kühlvorrichtung (2) erzeugte Kühlleistung so reguliert wird, dass einerseits, in einer Plasmaphase, Flüssigkeit aus der Pufferreserve (4) anhand eines ermittelten Anfangsflüssigkeitspegels verbraucht wird und andererseits in der Reserve (4) der Anfangsflüssigkeitspegel außerhalb der Plasmaphasen verbraucht wird.

9. Verfahren nach einem der Ansprüche 5 bis 8, **dadurch gekennzeichnet, dass** die Kühlleistung der Kühlvorrichtung (2) reguliert wird, um den Mittelwert des Flüssigkeitspegels in der Reserve (4) konstant zu halten.

10. Verfahren nach einem der Ansprüche 1 bis 9, **dadurch gekennzeichnet, dass** die Kühlleistung der Kühlvorrichtung (2) gemäß einer erzwungenen Variation des harmonischen Typs reguliert wird.

**11.** Verfahren nach einem der Ansprüche 1 bis 10, **dadurch gekennzeichnet, dass** die Regulierung der von der Kühlvorrichtung erzeugten Kühlleistung durch Regeln des Pegels von wenigstens einem Zyklusdruck des Arbeitsfluids in dem Arbeitszyklus und/oder durch Regeln der Drehzahl von im Arbeitszyklus verwendeten Kompressoren, besonders bei der Kompression, erfolgt.

**12.** Verfahren nach einem der Ansprüche 1 bis 11, **dadurch gekennzeichnet, dass** die Regelung der erzeugten Kühlleistung durch Variieren, direkt oder indirekt, der von der Kühlleistung aufgenommenen elektrischen Leistung erfolgt.

**13.** Kühlanlage durch pulsiertes Laden eines Teils (1) eines "Tokamak" (11), wobei die Anlage mit einer Kühlvorrichtung (2) mit einem Kreislauf ausgestattet ist, der einen Arbeitszyklus für ein Arbeitsfluid wie Helium bildet, wobei der Kreislauf der Kühlvorrichtung (2) Folgendes umfasst:

　　- eine Station (12) zum Komprimieren des Arbeitsgases, die von wenigstens einem Kompressor (8) gebildet wird,
　　- ein Vorkühl-/Kühlgehäuse (9), das wenigstens einen Wärmetauscher (10) und wenigstens einen Teil (211) zum Entspannen des Arbeitsgases umfasst, das aus der Kompressionsstation (2) austritt,
　　- ein Wärmetauschsystem (4, 7, 122) zwischen dem gekühlten Arbeitsfluid und dem Teil (1),
　　- ein System (13, 14, 10) zum Senden des mit dem Teil (1) thermisch ausgetauschten Fluids zu der Kompressionsstation (12),

wobei die Anlage eine elektronische Logik (15) zum Steuern der Kühlvorrichtung (2) umfasst, die eine Regulierung der von der Kühlvorrichtung (2) erzeugten Kühlleistung gewährleistet, um diese Kühlleistung pünktlich auf ein relativ hohes Niveau zu erhöhen, wenn der Tokamak (11) in einer Plasmaerzeugungsphase ist, wobei die Anlage **dadurch gekennzeichnet ist, dass** der Tokamak (11) einen Sender (112) für ein Auslösesignal (S) bei jedem Start einer Erzeugung eines Plasmas umfasst, wobei die elektronische Logik (15) einen Empfänger des Auslösesignals (S) umfasst, um automatisch die Erhöhung der von der Kühlvorrichtung (2) erzeugten Kühlleistung beim Empfang dieses Signals (S) zu befehlen (C), und dadurch, dass die elektronische Steuerlogik (15) zum selektiven Regulieren der Kühlleistung der Kühlvorrichtung (2) gemäß einer erzwungenen Variation ebenfalls des Typs "periodisch und symmetrisch" als Reaktion auf das Signal (S) konfiguriert ist.

**14.** Anlage nach Anspruch 13, **dadurch gekennzeichnet, dass** die elektronische Logik (15) zum Variieren der von der Vorrichtung erzeugten Kühlleistung durch Kontrollieren von wenigstens einem Arbeitsfluidzyklusdruck in dem Arbeitszyklus und/oder durch Kontrollieren der Drehzahl der in dem Arbeitszyklus verwendeten Kompressoren, besonders bei der Kompression, konfiguriert ist.

**15.** Anlage nach einem der Ansprüche 13 oder 14, **dadurch gekennzeichnet, dass** die elektronische Logik (15) zum Regulieren, direkt oder indirekt, der von der Kühlvorrichtung aufgenommenen elektronischen Leistung konfiguriert ist.

## Claims

**1.** Pulsed-load method for cooling an element (1) of a "tokamak" (11), that is to say an element (1) of an assembly (11) for intermittently generating a plasma, the method using a cooling device (2) that subjects a working fluid such as helium to a working cycle (3) comprising: compression (12), cooling and expansion (22, 211), heat exchange (32) with the element (1), and heating, the tokamak (11) comprising at least one operating mode referred to as a "periodic and symmetric" operating mode, that is to say an operating mode in which plasmas of preset duration (Dp) are generated periodically with intervals between two successive plasmas having a duration (Dnp) differing at most by 30 % with respect to the duration (Dp) of the plasmas (Dnp=Dp±30 %), according to the method, the cooling power produced by the cooling device (2) being increased to a relatively high level when the tokamak (11) is in a plasma generation phase (Dp) whereas the cooling power produced by the cooling device (2) is reduced to a relatively low level when the tokamak (11) is no longer in a plasma generation phase (Dnp), **characterised in that** during the "periodic and symmetric" operating phase of the tokamak (11), the cooling power produced by the cooling device (2) is regulated using forced variation which is also of the "periodic and symmetric" type, that is to say the respective durations for generating a high cooling level and for generating a low level of cooling power differ by 30 % at most, and **in that** the variation in cooling power produces progressive increases and decreases in cooling power, and **in that** the increase in the cooling power produced by the cooling device (2) is triggered in advance, in response to a signal (S) produced during a step of starting a plasma in the tokamak (11), that is to say before the thermal load on the element (1) increases.

**2.** Method according to claim 1, **characterised in that** the working cycle (3) comprises stages in which the working fluid is respectively subjected to a high pressure (HP), an medium pressure (MP) and a low pressure (BP) and **in that**, during the periodic and symmetric operating phase of the tokamak, at least one of the high pressure level (HP) and the medium pressure level (MP) is regulated using forced "periodic and symmetric" variation, that is to say that the amplitude of the pressure (MP, HP) is regulated between respective high and low values for respective durations that differ by 30 % at most.

3. Method according to claim 2, **characterised in that** the high pressure level (HP) and/or the medium pressure level (MP) is regulated by modulating the amplitude of the pressure around a respective preset average pressure value.

4. Method according to claim 3, **characterised in that** the modulation of the amplitude of the pressure is carried out automatically by a logic controller implementing at least one of:

   - proportional integral derivative (PID) closed loop control;
   - iterative control via an adaptive control law such as a least mean square (LMS) law; and
   - linear quadratic regulator (LQR) control.

5. Method according to any of claims 2 to 4, **characterised in that** the method comprises at least one period during which the cooling device (2) liquefies the working fluid and stores the liquefied fluid in a buffer reserve (4) in order to use it to reproduce cooling power during a plasma phase, and **in that** the high pressure (HP) level and/or the medium pressure level (MP) and/or low pressure level is regulated according to the liquid level measured in the buffer reserve (4) and/or according to the average value of this liquid level.

6. Method according to claim 5, **characterised in that** the high pressure (HP) level and/or the medium pressure (MP) level and/or low pressure level is regulated according to the root mean square (RMS) value of the liquid level measured in the buffer reserve (4).

7. Method according to either claim 5 or claim 6, **characterised in that** the high pressure (HP) level and/or the medium pressure (MP) level and/or low pressure level is regulated according to the maximum measured value of the liquid level in the buffer reserve (4).

8. Method according to any of claims 5 to 7, **characterised in that** the cooling power produced by the cooling device (2) is regulated so as, on the one hand, to consume, during a plasma phase, the liquid in the buffer reserve (4), starting from a preset initial liquid level and, on the other hand, to restore said initial liquid level in the reserve (4) between plasma phases.

9. Method according to any of claims 5 to 8, **characterised in that** the cooling power of the cooling device (2) is regulated so as to keep the average value of the liquid level in the reserve (4) constant.

10. Method according to any of claims 1 to 9, **characterised in that** the cooling power of the cooling device (2) is regulated using harmonic forced variation.

11. Method according to any of claims 1 to 10, **characterised in that** the cooling power produced by the cooling device is regulated by controlling the level of at least one cycle pressure of the working fluid in the working cycle and/or by regulating the rotational speed of compressors used in the working cycle, in particular during the compression.

12. Method according to any of claims 1 to 11, **characterised in that** the cooling power produced is regulated by directly or indirectly varying the electric power consumed by the cooling device.

13. Pulsed-load cooling assembly for cooling an element (1) of a tokamak (11), the assembly being equipped with a cooling device (2) comprising a circuit forming a working cycle for a working fluid such as helium, the circuit of the cooling device (2) comprising:

   - a station (12) for compressing the working gas, which station is equipped with at least one compressor (8),
   - a precooling/cooling unit (9) comprising at least one heat exchanger (10) and at least one element (211) for expanding the working gas that is output from the compressing station (2),
   - a system (4, 7, 122) for exchanging heat between the cooled working fluid and the element (1), and
   - a system (13, 14, 10) for returning fluid that has exchanged heat with the element (1) to the compressing station (12),

the assembly comprising a logic controller (15) for controlling the cooling device (2), ensuring regulation of the cooling power produced by said cooling device (2), in order for this cooling power to be temporarily increased to a relatively high level when the tokamak (11) is in a plasma generation phase, the assembly being **characterised in that** the tokamak (11) comprises an emitter (112) that emits a triggering signal (S) each time a plasma generation begins, the logic controller (15) comprising a receiver that receives said triggering signal (S) so as to automatically control (C) the increase in the cooling power produced by the cooling device (2) upon reception of this signal (S), and **in that** the logic controller (15) is configured to selectively regulate the cooling power of the cooling device (2) using forced variation which is also of the "periodic and symmetric" type in response to said signal (S).

14. Assembly according to claim 13, **characterised in that** the logic controller (15) is configured to vary the cooling power produced by the device by controlling at least one cycle pressure of the working fluid in the working cycle and/or by controlling the rotational speed of compressors used in the working cycle, in particular during the compression.

15. Assembly according to either claim 13 or claim 14, **characterised in that** the logic controller (15) is configured to directly or indirectly regulate the electronic power consumed by the cooling device.

FIG.1

(t)

FIG.3

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009024705 A

**Littérature non-brevet citée dans la description**

- **DAUGUET P. ; BRIEND P. ; DESCHILDRE C. ; SEQUEIRA S.E.** Using Dynamic Simulation to support Helium Refrigerator Process Engineering. *Proceedings of ICEC 22 - ICMC 2008,* 2008, 39-44

- **KALININ V. ; TADA E. ; MILLET F. ; SHATIL N.** ITER cryogenic system. *Fusion Engineering and Design,* vol. 81 (23-24), 2589-2595